# EUROPEAN PATENT APPLICATION

(11) **EP 4 580 104 A1**
(43) Date of publication of application: **02.07.2025**
(21) Application number: 23851645.4
(22) Date of filing: 01.08.2023
(51) Int. Cl.: H04L 5/00

(54) **METHOD AND APPARATUS USED IN NODE FOR RADIO COMMUNICATION**

(30) Priority: 07.08.2022 CN 202210940839
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/110511
(87) International publication number: WO 2024/032424

(57) **Abstract**

The present application discloses a method used in a node for wireless communication, and an apparatus. A first node receiving a first higher layer message set, the first higher layer message set being used to configure a first RS resource pool for a first BWP, the first RS resource pool being used for radio link quality assessment; receiving a first signaling, the protocol layer to which the first signaling belongs is a protocol layer under the RRC layer; as a response to receiving the first signal, the radio link quality of the first BWP is assessed according to the second RS resource pool. At least one RS resource of the second RS resource pool depends on the TCI state of CORESET.

## Description

### Technical Field

The present application relates to transmission methods and apparatus in wireless communication systems, in particular to transmission methods and apparatus of wireless signals in wireless communication systems that support cellular networks.

### Background Art

In the future, the application scenarios of wireless communication systems will become more diverse, and the different application scenarios impose different performance requirements on the system. In order to meet the different performance needs of a variety of application scenarios, it was decided to conduct a study on new radio (NR) (or 5G) technology at the 3GPP (3rd Generation Partner Project) RAN (Radio Access Network) #72 plenary meeting. At the 3GPP RAN #75 plenary meeting, the WI (Work Item) of the new radio (NR) technology was passed to begin the standardization work on NR.

Currently, research work has been started on R18 version of 5G NR, and network energy saving is one of the SIs (Study Item), of which the adaptation of a spatial element of a base station (for example: an antenna element, an antenna panel, an antenna port, a logical antenna port, a transmit radio unit (TxRU), a transmission reception point (TRxP), etc.) is a research direction for energy saving.

### Summary of Invention

The inventor have found, through research, that the assessment of radio link quality is a key issue in wireless communication systems.

Disclosed in the present application are a solution to the above problems. It should be noted that in the description of the present application, the up-down link is only a typical application scenario; the present application is also applicable to other scenarios facing similar problems (such as sidelink and vehicle networking) and similar technical effects can be achieved. In addition, adoption of an unified solution across different scenarios (including, but not limited to, multi-carrier scenarios) can also help reduce hardware complexity and costs. Without conflicting, the embodiments and features in the embodiments of the first node device of the present application may be applied to the second node device and vice versa. In particular, the interpretation of terminology, nouns, functions, variables (if not otherwise specified) in the present application may refer to the definitions in the 3GPP specification protocol TS36 series, TS37 series, and TS38 series.

As an embodiment, the interpretation of terminology in the present application is the definition of a 3GPP specification protocol TS36 series.

As an embodiment, the interpretation of terminology in the present application is the definition of a specification protocol TS38 series, referring to 3GPP.

As an embodiment, the interpretation of terminology in the present application is the definition of a specification protocol TS37 series, referring to 3GPP.

As an embodiment, the interpretation of terminology in the present application refers to the definitions in the specifications protocol of IEEE (Institute of Electrical and Electronics Engineers).

The present application discloses a method used in a first node for wireless communication, comprising:
receiving a first higher layer message, and the first higher layer message is used for configuring a first RS resource pool for a first BWP, and the first RS resource pool is used for a radio link quality assessment;
receiving a first signaling, the protocol layer to which the first signal belongs is a protocol layer under the RRC layer;
as a response to receiving the first signaling, assessing a radio link quality of the first BWP according to a second RS resource pool;
wherein at least one RS resource of the second RS resource pool depends on the TCI state of CORESET.

As an embodiment, issues to be addressed by the present application include: how to adjust Reference Signal (RS) resources that assess the quality of radio links.

According to one aspect of the present application, wherein the first signaling is used to determine a first RS resource associated with the first RS resource pool.

According to one aspect of the present application, wherein at least one RS resource of the second RS resource pool depends on the configuration of the first higher layer message set.

According to one aspect of the present application, wherein it comprises:
when the target counter value is equal to or greater than the target threshold, triggering a beam failure recovery for the first serving cell;
wherein the first BWP is a BWP of the first serving cell; whenever the radio link quality assessed according to the second RS resource pool is worse than a reference threshold, the physical layer of the first node sends a beam failure event indication for the first serving cell to a higher layer; the target counter is used for a count of the beam failure event indication for the first serving cell.

According to one aspect of the present application, wherein the conduct of assessing the radio link quality of the first BWP according to a second RS resource pool comprises: assessing radio link quality according to a first RS resource set and a second RS resource set respectively;
wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

According to one aspect of the present application, wherein each RS resource in the first RS resource set depends on the TCI state of CORESET and each RS resource in the second RS resource set depends on the configuration of the first higher layer message set.

According to one aspect of the present application, wherein whenever the radio link quality assessed based on the first RS resource set is worse than a reference threshold, the physical layer of the first node sends a beam failure event indication for the first RS resource set to a higher layer; when the radio link quality assessed based on the second RS resource set is worse than the reference threshold, the physical layer of the first node sends a beam failure event indication for the second RS resource set to a higher layer; a first counter is used to count the beam failure event indications for the first RS resource set, and a second counter is used to count the beam failure event indications for the second RS resource set.

According to one aspect of the present application, wherein it comprises:
sending a first signal;
wherein a beam failure recovery for the first serving cell is triggered; and a beam failure recovery process for the first serving cell includes sending the first signal.

The present application discloses a method used in a second node for wireless communication, comprising:
sending a first higher layer message set, and the first higher layer message set is used for configuring a first RS resource pool for the first BWP, and the first RS resource pool is used for a radio link quality assessment;
sending a first signaling, the protocol layer to which the first signal belongs is a protocol layer under the RRC layer;
wherein, as a response of the receiver of the first signaling to receive the first signaling, the receiver of the first signaling assesses the radio link quality of the first BWP based on the second RS resource pool; at least one RS resource in the second RS resource pool depends on the TCI state of the CORESET.

According to one aspect of the present application, the first signaling is used to determine a first RS resource, and the first RS resource is associated with the first RS resource pool.

According to one aspect of the present application, at least one RS resource in the second RS resource pool depends on the configuration of the first higher layer message set.

According to one aspect of the present application, wherein the receiver of the first signaling triggers a beam failure recovery for a first serving cell when the value of the target counter is equal to or greater than the target threshold; wherein the first BWP is a BWP for the first serving cell; and whenever the radio link quality assessed according to the second RS resource pool is worse than a reference threshold, the physical layer of the receiver of the first signaling sends a beam failure event indication for the first serving cell to a higher layer of the receiver; the target counter is used to count the beam failure event indications for the first serving cell.

According to one aspect of the present application, wherein the behavior in which the receiver of the first signaling assesses the radio link quality of the first BWP based on the second RS resource poo comprises: the receiver of the first signaling assesses radio link quality according to a first RS resource set and a second RS resource set respectively;
wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

According to one aspect of the present application, wherein each RS resource in the first RS resource set depends on the TCI state of CORESET and each RS resource in the second RS resource set depends on the configuration of the first higher layer message set.

According to one aspect of the present application, wherein whenever the radio link quality assessed based on the first RS resource set is worse than a reference threshold, the physical layer of the receiver of the first node sends a beam failure event indication for the first RS resource set to a higher layer of the receiver of the first node; when the radio link quality assessed based on the second RS resource set is worse than the reference threshold, the physical layer of the receiver of the first node sends a beam failure event indication for the second RS resource set to a higher layer of the receiver of the first node; a first counter is used to count the beam failure event indications for the first RS resource set, and a second counter is used to count the beam failure event indications for the second RS resource set.

According to one aspect of the present application, wherein it comprises:
receiving a first signal;
wherein a beam failure recovery for the first serving cell is triggered; the beam failure recovery process for the first serving cell includes sending the first signaling to the receiver of the first signaling.

The present application discloses a first node device for wireless communication, comprising:
a first receiver receiving a first higher layer message set, the first higher layer message set being used to configure a first RS resource pool for a first BWP, the first RS resource pool being used for radio link quality assessment; receiving a first signaling, the protocol layer to which the first signaling belongs is a protocol layer under the RRC layer; as a response to receiving the first signal, the radio link quality of the first BWP is assessed according to the second RS resource pool;
wherein at least one RS resource of the second RS resource pool depends on the TCI state of CORESET.

The present application discloses a second node device for wireless communication, comprising:
a second transmitter sending a first higher layer message set, the first higher layer message set being used to configure a first RS resource pool for a first BWP, the first RS resource pool being used for radio link quality assessment; sending a first signaling, the protocol layer to which the first signaling belongs is a protocol layer under the RRC layer;
wherein, as a response of the receiver of the first signaling to receive the first signaling, the receiver of the first signaling assesses the radio link quality of the first BWP based on the second RS resource pool; at least one RS resource in the second RS resource pool depends on the TCI state of the CORESET.

As an embodiment, the present application has the following advantages over conventional schemes:
- According to the signaling of the protocol layer under the RRC layer (such as MAC CE or physical layer signaling), faster adjustment of RS resources for assessing radio link quality enables rapid adaptation to changes in the environment and scenarios.

### Description of Accompanying Drawings

Other features, objects, and advantages of the present application will become more apparent by reading the detailed description of the non-limiting embodiments with reference to the following drawings:
FIG. 1 illustrates a flow diagram of receiving a first higher layer message set and receiving a first signaling according to one embodiment of the present application;
FIG. 2 illustrates a schematic diagram of a network architecture according to one embodiment of the present application;
FIG. 3 illustrates a schematic diagram of an embodiment of a wireless protocol architecture for an user plane and a control plane according to one embodiment of the present application;
FIG. 4 illustrates a schematic diagram of a first communication device and a second communication device according to one embodiment of the present application;
FIG. 5 illustrates a flow diagram of wireless transmission according to one embodiment of the present application;
FIG. 6 illustrates a schematic diagram of a first signaling according to one embodiment of the present application;
FIG. 7 illustrates a schematic diagram of a second RS resource according to one embodiment of the present application;
FIG. 8 illustrates a schematic diagram of a beam failure recovery for a first serving cell according to one embodiment of the present application;
FIG. 9 illustrates a schematic diagram of a first RS resource set and a second RS resource set according to one embodiment of the present application;
FIG. 10 illustrates a schematic diagram of a first RS resource set and a second RS resource set according to another embodiment of the present application;
FIG. 11 illustrates a schematic diagram of a beam failure event indication for a first RS resource set and a beam failure event indication for a second RS resource set according to one embodiment of the present application;
FIG. 12 illustrates a structural block diagram of a processing apparatus for use in a first node device according to one embodiment of the present application;
FIG. 13 illustrates a structural block diagram of a processing apparatus for use in a second node device according to one embodiment of the present application.

### Specific Embodiments

The technical solution of the present application will be described in further detail below in conjunction with the accompanying drawings, and it is to be noted that, in the absence of conflicts, the embodiments of the present application and the features in the embodiments may be combined with each other arbitrarily.

### Embodiment 1

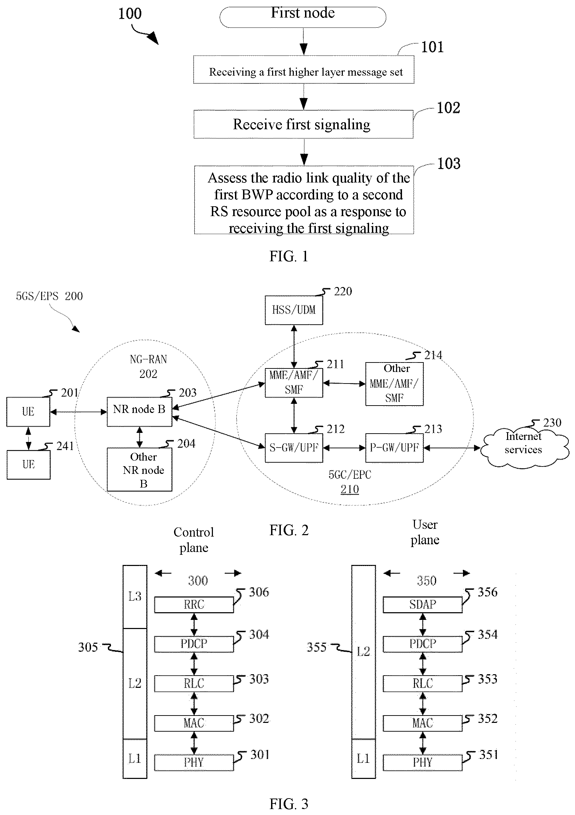

Embodiment 1 exemplifies a flow diagram for receiving a first higher layer message set and receiving a first signaling according to one embodiment of the present application, as shown in FIG. 1. In 100 shown in FIG. 1, each block represents a step.

In Embodiment 1, the first node in the present application receives a first higher layer message set in Step 101; receives a first signaling in Step 102; assesses radio link quality of the first BWP according to a second RS resource pool as a response to receiving the first signaling in Step 103; wherein the first higher layer message set is used to configure a first RS resource pool for the first BWP, and the first RS resource pool is used for radio link quality assessment; the protocol layer to which the first signaling belongs is a protocol layer under the RRC layer; at least one RS resource in the second RS resource pool depends on the TCI state of the CORESET.

As an embodiment, the protocol layer to which the first signaling belongs is a MAC layer.

As an embodiment, the protocol layer to which the first signaling belongs is a MAC layer and the first signaling is a MAC CE.

As an embodiment, the protocol layer to which the first signaling belongs is a physical layer.

As an embodiment, the protocol layer to which the first signaling belongs is a physical layer and the first signaling is a physical layer signaling.

As an embodiment, the protocol layer to which the first signaling belongs is a physical layer, and the first signaling is DCI signaling.

As an embodiment, the first signaling is cell common.

As an embodiment, the first signaling is cell specific.

As an embodiment, the first signaling is UE group common.

As an embodiment, the first signaling is UE group specific.

As an embodiment, the first signaling is UE specific.

As an embodiment, the first signaling is used to update or indicate a spatial element.

As an embodiment, the first signaling is used to update or indicate the number of spatial elements.

As an embodiment, the first signaling is used to activate or deactivate a TCI state.

As an embodiment, the first signaling is used to activate or deactivate a spatial element.

As an embodiment, the first signaling is used to activate or deactivate the number of spatial elements. As an embodiment, the spatial element includes a TCI state.

As an embodiment, the spatial element includes at least one of a TCI state, an antenna element, an antenna panel, an antenna port, a logical antenna port, a Transmit Radio Unit (TxRU), and a Transmission Reception Point (TRxP).

As an embodiment, the first signaling is used to indicate a first value.

As an embodiment, the first value relates to a spatial element.

As an embodiment, the first value is used to indicate an adjustment of a spatial element.

As an embodiment, the first value is used to determine an adjusted spatial element.

As an embodiment, the first value is used to indicate an adjusted spatial element.

As an embodiment, the first value indicates a TCI state.

As an embodiment, the first value indicates at least one TCI state.

As an embodiment, the first value is an index of a TCI state.

As an embodiment, the first value is an index of a TCI state group.

As an embodiment, the first value is a non-negative integer.

As an embodiment, the first value is an integer.

As an embodiment, the first value is a real number.

As an embodiment, the first value is an index group.

As an embodiment, the first value is an index.

As an embodiment, the first value is an identity.

As an embodiment, the first value is a bit sequence.

As an embodiment, the first RS resource pool comprises at least one RS resource, and at least one RS resource in the RS resource pool comprising at least one of a Channel State Information-Reference Signal (CSI-RS) resource or a Synchronization Signal/Physical Broadcast CHannel (SS/PBCH) Block resource.

As an embodiment, the first RS resource pool includes at least one RS resource, any one of the RS resource in the first RS resource pool being a CSI-RS resource.

As an embodiment, the first RS resource pool includes at least one RS resource, any one of the RS resource in the first RS resource pool being a periodic CSI-RS resource.

As an embodiment, the first RS resource pool includes a maximum number of RS resources of 2, and the first RS resource pool includes a maximum number of RS resources of 2.

As an embodiment, the second RS resource pool includes the first RS resource set and the second RS resource set; the first RS resource pool includes a third RS resource set and a fourth RS resource set; and each set in the first RS resource pool, the second RS resource pool, the third RS resource pool, and the fourth RS resource set include a maximum of K RS resource sets.

As an embodiment, the index of one RS resource is used to identify the RS resource.

As an embodiment, the index of one RS resource is a configured index of the RS resource.

As an embodiment, the index of one RS resource includes a configuration index of the RS resource.

As an embodiment, an index of a periodic CSI-RS resource is a configuration index of the periodic CSI-RS resource.

As an embodiment, an index of a periodic CSI-RS resource includes a configuration index of the periodic CSI-RS resource.

As an embodiment, the index of one CSI-RS resource is a NZP-CSI-RS-ResourceId.

As an embodiment, the index of one CSI-RS resource is a NZP-CSI-RS-ResourceId.

As an embodiment, the index of one CSI-RS resource is a csi-RS-Index.

As an embodiment, the index of one SS/PBCH block resource is a SSB-Index.

As an embodiment, the index of one SS/PBCH block resource is a ssb-Index.

As an embodiment, the first RS resource pool and the second RS resource pool are different.

As an embodiment, at least one of the RS resources of the second RS resource pool does not belong to the first RS resource pool.

As an embodiment, at least one of the RS resources in the second RS resource pool is not configured or activated by the first higher layer message set.

As an embodiment, any one of the RS resource in the second RS resource pool is not configured or activated by the first higher layer message set.

As an embodiment, at least one of the RS resources in the second RS resource pool is determined implicitly.

As an embodiment, any one of the RS resource in the second RS resource pool is determined implicitly.

As an embodiment, at least one RS resource of the second RS resource pool is determined according to at least one RS resource index of the RS resource set indicated by at least one CORESET TCI state used by the first node for monitoring PDCCH.

As an embodiment, each RS resource in the second RS resource pool is determined according to at least one RS resource index of the RS resource set indicated by at least one CORESET TCI state used by the first node for monitoring PDCCH.

As an embodiment, the second RS resource pool includes at least one RS resource and at least one RS resource in the second RS resource pool includes at least one of a CSI-RS resource or a SS/PBCH block resource.

As an embodiment, the second RS resource pool includes at least one RS resource, and any one of the RS resource in the second RS resource pool is a CSI-RS resource.

As an embodiment, the second RS resource pool includes at least one RS resource, and any one of the RS resource in the second RS resource pool is a periodic CSI-RS resource.

As an embodiment, the first RS resource pool includes at least one RS resource, any one of the RS resource in the first RS resource pool being a periodic CSI-RS resource; the second RS resource pool includes at least one RS resource, and any one of the RS resource in the second RS resource pool being a periodic CSI-RS resource.

As an embodiment, the second RS resource pool includes at least one periodic CSI-RS resource, the index of any one of the periodic CSI-RS resource included by the second RS resource pool being the same as one of the RS resource indices in the RS resource set indicated by the TCI state of one CORESET used by the first node monitoring PDCCH in the first BWP.

As an embodiment, one of the RS resources in the second RS resource pool belongs to the first RS resource pool.

As an embodiment, at least one of the RS resources of the second RS resource pool belongs to the first RS resource pool.

As an embodiment, each RS resource in the second RS resource pool depends on the TCI state of CORESET.

As an embodiment, each RS resource in the second RS resource pool depends on the TCI state of CORESET.

As an embodiment, the first signaling is used to determine the second RS resource pool.

As an embodiment, the meaning of the phrase "at least one of the RS resources in the second RS resource pool depends on the TCI state of CORESET" includes: Only one of the RS resources in the second RS resource pool depends on the TCI state of CORESET.

As an embodiment, the meaning of the phrase "at least one of the RS resources in the second RS resource pool depends on the TCI state of CORESET" includes: Each of the RS resources in the second RS resource pool depends on a TCI state of CORESET.

As an embodiment, the meaning of the phrase "at least one of the RS resources in the second RS resource pool depends on the TCI state of CORESET" includes: The index of at least one RS resource in the second RS resource pool is the same as the RS resource index in the RS resource set indicated by the first node in the first BWP for monitoring the TCI state of CORESET used by PDCCH.

As an embodiment, the meaning of the phrase "at least one of the RS resources in the second RS resource pool depends on the TCI state of CORESET" includes: The index of each of the RS resources in the second RS resource pool is the same as one of the RS resource indexes in the first RS resource set indicated by the first node in the first BWP for monitoring the TCI state of one CORESET used by PDCCH.

### Embodiment 2

Embodiment 2 exemplifies a schematic diagram of a network architecture according to one embodiment of the present application, as shown in FIG. 2.

FIG. 2 illustrates a network architecture 200 of an LTE (Long-Term Evolution), LTE-A (Long-Term Evolution Advanced) and future 5G system. The network architecture 200 of LTE, LTE-A, and future 5G system is called EPS (Evolved Packet System) 200. The 5G NR or LTE network architecture 200 may be referred to as 5GS (5G System)/EPS (Evolved Packet System) 200 or some other suitable term. The 5GS/EPS 200 may include one or more UE (User Equipment) 201, one UE241 for sidelink communication with UE201, an NG-RAN (next generation wireless access network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet exchange services, however it will be readily understood by those skilled in the art that various concepts presented throughout the present application can be extended to a network providing circuit exchange services. The NG-RAN 202 includes an NR (New Radio) node B (gNB) 203 and another gNB 204. The gNB203 provides for termination of the user and control plane protocol towards UE201. The gNB 203 may be connected to the other gNB 204 via an Xn interface (e.g., backhaul). The gNB 203 may also be referred to as a base station, a base transceiver station, a radio base station, a radio transceiver, a transceiver function, a base service set (BSS), an extension service set (ESS), a TRP (transmitter receiver point), or some other suitable term. The gNB 203 provides access points to the 5GC/EPC 210 for the UE 201. Embodiments of the UE 201 include cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, drones, aircraft, narrow band physical network devices, machine type communication devices, land vehicles, automobiles, wearable devices, or any other similar function devices. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, an user agent, a mobile client, a client, or some other suitable term. The gNB 203 is connected to the 5GC/EPC 210 via an S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212 and a P-GW (Packet Data Network Gateway)/UPF 213. MME/AMF/SMF211 is a control node that processes signaling between UE201 and 5GC/EPC210. Generally, the MME/AMF/SMF 211 provides carrier and connection management. All user IP (Internet Protocol) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 includes an operator's corresponding Internet protocol service, which may include, inter alia, the Internet, an intranet, an IMS (IP Multimedia Subsystem) and a Packet switching service.

As an embodiment, the first node in the present application includes the UE 201.

As an embodiment, the first node in the present application includes the UE 241.

As an embodiment, the second node in the present application includes the gNB 203.

### Embodiment 3

Embodiment 3 exemplifies a schematic diagram of an embodiment of a wireless protocol architecture for an user plane and a control plane, according to one embodiment of the present application, as shown in FIG. 3.

Embodiment 3 illustrates a schematic diagram of an embodiment of a wireless protocol architecture for an user plane and a control plane, according to one embodiment of the present application, as shown in FIG. 3. FIG. 3 is a schematic diagram illustrating an embodiment of a radio protocol architecture for the user plane 350 and the control plane 300, and FIG. 3 illustrates, with three layers, a radio protocol architecture for the control plane 300 between a first communication node device (RSU in UE, gNB or V2X) and a second communication node device (RSU in gNB, UE or V2X), or between two UEs: layers 1, 2 and 3. The layer 1 (L1 layer) is the lowest layer and implements various PHY (physical layer) signal processing functions. The L1 layer will be referred to herein as PHY 301. The layer 2 (L2 layer) 305 is over the PHY 301 and is responsible for the link between the first communication node device and the second communication node device, or between two UEs. The L2 layer 305 comprises a Medium Access Control (MAC) sublayer 302, a Radio Link Control (RLC), sublayer 303, and a Packet Data Convergence Protocol (PDCP) sublayer 304 which terminate at the second communication node device. The PDCP sublayer 304 provides multiplexes between different radio carriers and logical channels. The PDCP sublayer 304 also provides security by encrypting the data packet and inter-cell movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 comprises a layer 1 (L1 layer) and a layer 2 (L2 layer), the radio protocol architecture for the first communication node device and the second communication node device is generally the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355. However, the PDCP sublayer 354 also provides header compression for upper-layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, the first signaling is created in the PHY 301, or the PHY 351.

As an embodiment, the first higher layer message set is generated at the RRC sublayer 306.

As an embodiment, the first higher layer message set is generated at the RRC sublayer 306 and the MAC sublayer 302.

As an embodiment, the target counter is generated at the MAC sublayer 302.

As an embodiment, the first counter and the second counter are generated at the MAC sublayer 302.

As an embodiment, the first higher layer message set is generated at the MAC sublayer 352.

As an embodiment, the target counter is generated at the MAC sublayer 352.

As an embodiment, the first counter and the second counter are generated at the MAC sublayer 352.

### Embodiment 4

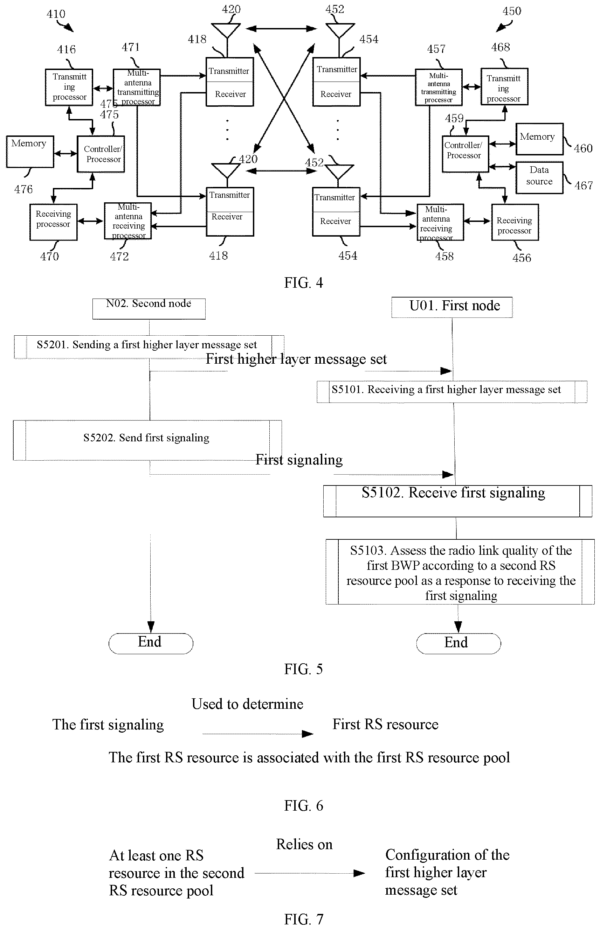

Embodiment 4 exemplifies a schematic diagram of a first communication device and a second communication device according to one embodiment of the present application, as shown in FIG. 4. FIG. 4 is a block diagram of a first communication device 410 and a second communication device 450 in communication with one another over an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communication device 410 to the second communication device 450, at the first communication device 410, an upper layer data packet from the core network is provided to the controller/processor 475. The controller/processor 475 implements the functionality of the L2 layer. In the DL, the controller/processor 475 provides header compression, encryption, packet segmentation and reordering, multiplexing between logical and transmission channels, and radio resource allocation to the second communication device 450 based on various priority measures. The controller/processor 475 is also responsible for HARQ operation, retransmission of the lost package, and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as a constellation mapping based on various modulation schemes (e.g., bi-phase shift keying (BPSK), orthogonal phase shift keying (QPSK), M-phase shift keying (M-PSK), M-quadrature amplitude modulation (M-QAM)). The multi-antenna transmitting processor 471 pre-codes encoded and modulated symbols in digital space, including codebook-based pre-coding and non-codebook-based pre-coding, and beam-forming processing to generate one or more parallel streams. The transmitting processor 416 then maps each parallel stream to the sub-carrier, juxtaposes the modulated symbol with a reference signal (e.g., frequency direct) in the time and/or frequency domain, and then uses an inverse fast Fourier transform (IFFT) to produce a physical channel that carries the time domain multi-carrier symbol flow. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communication device 410 to the second communication device 450, at the second communication device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456 where the reference signal is used for channel estimation and the data signal is detected by the multi-antenna receiving processor 458 to recover any parallel stream destined for the second communication device 450. The symbols on each parallel stream are demodulated and restored in the receiving processor 456 and generate a soft decision. The receiving processor 456 then decodes and de-interleaves the soft decision to resume the upper layer data and control signal transmitted by the first communication device 410 over the physical channel. The upper layer data and control signal are then provided to the controller/processor 459. The controller/processor 459 implements the functions of the L2 layer. The controller/processor 459 may be associated with the memory 460 that stores program code and data. The memory 460 may be referred to as a computer-readable medium. In the DL, the controller/processor 459 provides multiplexing between transmission and logical channels, packet reassembly, decryption, header decompression, control signal processing to recover the upper layer data packet from the core network. The upper layer data packet is then provided to all protocol layers above the L2 layer. Various control signals may also be provided to L3 for L3 processing. The controller/processor 459 is also responsible for error detection using the Acknowledge ( ACK ) and/or Negative Acknowledge (NACK) protocols to support HARQ operations.

In transmission from the second communication device 450 to the first communication device 410, at the second communication device 450, the data source 467 is used to provide the upper layer data packet to the controller/processor 459. The data source 467 represents all protocol layers above the L2 layer. Similar to the transmission function at the first communication device 410 described in the DL, the controller/processor 459 implements header compression, encryption, packet segmentation, and reordering, and multiplexing between logical and transmission channels based on wireless resource allocation of the first communication device 410, implementing L2 layer functions for the user plane and control plane. The controller/processor 459 is also responsible for HARQ operation, retransmission of the lost package, and signaling to the first communication device 410. The transmitting processor 468 executes a modulation mapping, channel encoding, and the multi-antenna transmitting processor 457 pre-encodes the digital multi-antenna space, including codebook-based pre-coding and non-codebook-based pre-coding, and beam-forming processing, and then the transmitting processor 468 modulates the resulting parallel stream into multi-carrier/single-carrier symbol flows, which, after simulated precoding/beam-forming operations in the multi-antenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 that stores program code and data. The memory 476 may be referred to as a computer-readable medium. The controller/processor 475 provides multiplexing between transmission and logical channels, packet reassembly, decryption, header decompression, control signal processing to recover the upper layer data packet from the second communication device 450. The upper layer data packet from the controller/processor 475 may be provided to the core network. The controller/processor 475 is also responsible for error detection using the ACK and/or NACK protocols to support HARQ operations.

As an embodiment, the second communication device 450 includes: at least one processor, and at least one memory comprising computer program code; at least one memory and computer program code configured for use with at least one processor. The second communication device 450 apparatus at least: receiving a first higher layer message set, the first higher layer message set is used to configure a first RS resource pool for a first BWP, the first RS resource pool is used for radio link quality assessment; receiving a first signaling, the protocol layer to which the first signaling belongs is a protocol layer under the RRC layer; as a response to receive the first signaling, assesses the radio link quality of the first BWP according to a second RS resource pool; wherein at least one RS resource of the second RS resource pool depends on the TCI state of CORESET.

As an embodiment, the second communication device 450 includes: a memory storing a computer-readable instruction program that, when executed by at least one processor, generates an action, the action comprising: receiving a first higher layer message set, the first higher layer message set is used to configure a first RS resource pool for a first BWP, the first RS resource pool is used for radio link quality assessment; receiving a first signaling, the protocol layer to which the first signaling belongs is a protocol layer under the RRC layer; as a response to receive the first signaling, assesses the radio link quality of the first BWP according to a second RS resource pool; wherein at least one RS resource of the second RS resource pool depends on the TCI state of CORESET.

As an embodiment, the first communication device 410 comprises: at least one processor, and at least one memory comprising computer program code; at least one memory and computer program code configured for use with at least one processor. The first communication device 410 device at least: sending a first higher layer message set, the first higher layer message set is used to configure a first RS resource pool for a first BWP, the first RS resource pool is used for radio link quality assessment; sending a first signaling, the protocol layer to which the first signaling belongs is a protocol layer under the RRC layer; wherein, as a response to receive the first signaling received by the receiver of the first signaling, the receiver of the first signaling assesses the radio link quality of the first BWP according to the second RS resource pool; at least one RS resource of the second RS pool depends on the CORESET.

As an embodiment, the first communication device 410 comprises: a memory storing a computer-readable instruction program that, when executed by at least one processor, generates an action, the action comprising: sending a first higher layer message set, the first higher layer message set is used to configure a first RS resource pool for a first BWP, the first RS resource pool is used for radio link quality assessment; sending a first signaling, the protocol layer to which the first signaling belongs is a protocol layer under the RRC layer; wherein, as a response to receive the first signaling received by the receiver of the first signaling, the receiver of the first signaling assesses the radio link quality of the first BWP according to the second RS resource pool; at least one RS resource of the second RS pool depends on the CORESET.

As an embodiment, the first node in the present application includes the second communication device 450.

As an embodiment, the second node in the present application includes the first communication device 410.

As an embodiment, at least one of {the antenna 452, the receiver 454, the receiving processor 456, the multi-antenna receiving processor 458, the controller/processor 459, the memory 460, the data source 467} is used to receive the first higher layer message set in the present application; at least one of {the antenna 420, the transmitter 418, the transmitting processor 416, the multi-antenna transmitting processor 471, the controller/processor 475, the memory 476} is used to transmit the first higher layer message set in the present application.

As an embodiment, at least one of {the antenna 452, the receiver 454, the receiving processor 456, the multi-antenna receiving processor 458, the controller/processor 459, the memory 460, the data source 467} is used to receive the first signaling in the present application; at least one of {the antenna 420, the transmitter 418, the transmitting processor 416, the multi-antenna transmitting processor 471, the controller/processor 475, the memory 476} is used to transmit the first signaling in the present application.

### Embodiment 5

Embodiment 5 exemplifies a flow diagram of wireless transmission according to one embodiment of the present application, as shown in FIG. 5. In FIG. 5, the first node U01 and the second node N02 are two communication nodes transmitted through an air interface, respectively.
for the **first node U01**, receiving a first higher layer message set in step S5101, receiving a first signaling in step S5102, and assessing radio link quality of the first BWP according to a second RS resource pool as a response to receiving the first signaling in step S5103;

For the **second node N02,** sending the first higher layer message set in step S5201; sending the first signaling in step S5202.

In Embodiment 5, the first higher layer message set is used to configure a first RS resource pool for the first BWP, the first RS resource pool is used for radio link quality assessment; the protocol layer to which the first signaling belongs is a protocol layer under the RRC layer; and at least one RS resource in the second RS resource pool depends on the TCI state of CORESET.

As an embodiment, the first higher layer message set is not used to configure the TCI state of CORESET.

As an embodiment, the first higher layer message set does not include RRC Information Element (IE) ControlResourceSet.

As an embodiment, the first higher layer message set does not include a message that includes a name of the tci-StatesPDCCH.

As an embodiment, the first higher layer message set does not include a domain that includes a name of the tci-StatesPDCCH.

As an embodiment, the only second RS resource pool in the first RS resource pool and the second RS resource pool includes at least one RS resource depends on a Transmission Configuration Indication (TCI) state of COntrol REsource SET (CORESET).

Typically, the first higher layer message set includes at least one higher layer message.

Typically, the first higher layer message set includes a RRC message.

Typically, the first higher layer message set includes a RRC message or at least a RRC message in MAC CE message.

As an embodiment, the first higher layer message set includes a RRC message and a MAC CE message.

Typically, the first higher layer message set includes a portion or all of a domain in one or more RRC IEs.

Typically, the first higher layer message set includes part or all of the domain in a RRC IE.

As an embodiment, the first higher layer message set includes part of the domain in RRC IE RadioLinkMonitoringConfig.

As an embodiment, the first higher layer message set includes a domain in the RRC IE that includes a failureDetectionResourcesToAddModList.

As an embodiment, the first higher layer message set includes the failureDetectionResourcesToAddModList domain in the RRC IE RadioLinkMonitoringConfig.

As an embodiment, the first higher layer message set includes a failureDetectionSet1 domain and a failureDetectionSet2 domain in the RRC IE RadioLinkMonitoringConfig.

As an embodiment, the first higher layer message set includes a name in the RRC IE including a domain of the failureDetectionSet1 and a domain of the name including the failureDetectionSet2.

As an embodiment, the first higher layer message set includes at least one name of the RRC IE including a domain of the failureDetectionSet.

As an embodiment, the name of the RRC message in the first higher layer message set includes a failureDetectionResources.

As an embodiment, the name of the RRC message in the first higher layer message set includes a failureDetectionSet.

As an embodiment, the RRC message in the first higher layer message set includes the failureDetectionSet1 domain and the failureDetectionSet2 domain in the RRC IE RadioLinkMonitoringConfig, and the MAC CE message in the first higher layer message set includes a BFD-RS Indication MAC CE.

As an embodiment, the MAC CE message in the first higher layer message set is a BFD-RS Indication MAC CE.

As an embodiment, the name of the MAC CE message in the first higher layer message set includes a BFD-RS Indication MAC CE.

As an embodiment, the name of the MAC CE message in the first higher layer message set includes a BFD.

As an embodiment, the first higher layer message set includes the failureDetectionSet1 domain and failureDetectionSet2 domain in the RRC IE RadioLinkMonitoringConfig, and the BFD-RS Indication MAC CE.

Typically, when the number of RS resources indicated by the failureDetectionSet1 domain or the failureDetectionSet2 domain in the RRC IE RadioLinkMonitoringConfig is greater than 2, the BFD-RS Indication MAC CE activates one or two RS resources from the failureDetectionSet1 or failureDetectionSet2.

As an embodiment, the specific definitions of RRC IE RadioLinkMonitoringConfig, failureDetectionResourcesToAddList domain, failureDetectionSet1 domain and failureDetectionSet2 domain are described in Section 6.3.2 of 3GPP TS38.331.

As an embodiment, the BFD-RS Indication MAC CE is specifically defined in Section 5.18.25 of 3GPP TS38.321.

Typically, each RS resource in the first RS resource pool depends on the configuration of the first higher layer message set.

As an embodiment, the first higher layer message set includes an index of each RS resource included in the first RS resource pool.

As an embodiment, the first higher layer message set includes an index of each RS resource included in the first RS resource pool.

As an embodiment, the first higher layer message set includes a RRC message and a MAC CE message; the RRC message in the first higher layer message set is used to configure a target RS resource pool for the first BWP and the MAC CE message in the first higher layer message set is used to activate the first RS resource pool from the target RS resource pool.

As an embodiment, the first higher layer message set includes a RRC message and a MAC CE message; the first RS resource pool belongs to a target RS resource pool, the RRC message in the first higher layer message set includes an index of each RS resource included in the target RS resource pool, and the MAC CE message in the first higher layer message set activates the first RS resource pool from the target RS resource pool.

As an embodiment, the first higher layer message set includes a RRC message and a MAC CE message; the first RS resource pool belongs to a target RS resource pool, the RRC message in the first higher layer message set includes an index of each RS resource included in the target RS resource pool, and the MAC CE message in the first higher layer message set activates the first RS resource pool from the target RS resource pool.

As an embodiment, reference to a CORESET pool includes at least one CORESET configured to the first BWP.

As an embodiment, the first receiver receives a reference RRC message, and the reference RRC message is used to configure the reference CORESET pool; the reference RRC message includes at least part or all of the domains of one of the RRC IE.

As a sub-embodiment of the above embodiment, the second transmitter sends a reference RRC message, the reference RRC message is used to configure the reference CORESET pool; the reference RRC message includes part or all of the domains of at least one RRC IE.

Typically, the reference RRC message includes a controlResourceSetToAddModList domain in the RRC IE.

Typically, the reference RRC message includes a domain in which the name in the RRC IE includes a controlResourceSetToAddModList.

As an embodiment, the second RS resource pool is determined in response to receiving a first signaling.

As an embodiment, the first node is not configured as a failureDetectionResourcesToAddModList domain in the RRC IE RadioLinkMonitoringConfig.

As an embodiment, the first node is not configured as a failureDetectionSet1 domain and the failureDetectionSet2 domain in the RRC IE RadioLinkMonitoringConfig.

As an embodiment, the first higher layer message set is used to configure a TCI state of at least one CORESET of the first BWP.

As an embodiment, the first higher layer message set includes a controlResourceSetToAddModList domain in the RRC IE.

As an embodiment, the first higher layer message set includes part or all of the domains in at least one RRC IE (Information Element) ControlResourceSet.

As an embodiment, the first higher layer message set includes at least one RRC IE ControlResourceSet.

As an embodiment, the first higher layer message set includes a tci-StatesPDCCH domain in at least one RRC IE ControlResourceSet.

As an embodiment, the first higher layer message set includes a domain in at least one RRC IE with name includes a tci-StatesPDCCH.

As an embodiment, the first higher layer message set is used to configure the reference CORESET pool.

As an embodiment, any one of the RS resource in the first RS resource pool and the second RS resource pool depends on the TCI state of CORESET.

As an embodiment, reference CORESET pool includes at least one CORESET configured to the first BWP, any one of the RS resource in the first RS resource pool depends on a TCI state of CORESET of one of the reference CORESET pools; any one of the RS resource in the second RS resource pool depends on a TCI state of one of the reference CORESET pools.

As an embodiment, a given RS resource is an index of any one of the RS resource included in the first RS resource pool, the given RS resource is the same as one of the RS resource indices in the RS resource set indicated by a given TCI state, and the TCI state is a TCI state of a CORESET used by the first node of the first BWP for monitoring PDCCH.

As an embodiment, a given RS resource is an index of any one of the RS resource included in the second RS resource pool, the given RS resource is the same as one of the RS resource indices in the RS resource set indicated by a given TCI state, and the TCI state is a TCI state of a CORESET used by the first node of the first BWP for monitoring PDCCH.

As an embodiment, any one of the RS resource in the first RS resource pool depends on a TCI state of one CORESET in the first CORESET group, the TCI state of any one of the CORESET in the first CORESET set is depended upon by one RS resource in the first RS resource pool; any one of the RS resource in the second RS resource pool depends on a TCI state of any one of the CORESET in the second CORESET group, and the TCI state of any one of the CORESET in the second CORESET set is depended upon by one RS resource in the second RS resource pool; the first CORESET group includes at least one of the CORESETs in the reference CORESET pool, and the second CORESET group includes at least one of the CORESETs in the reference CORESET pool.

As an embodiment, the first signaling is used to determine whether the first CORESET group and the second CORESET group are identical.

As an embodiment, the reference CORESET pool is arranged in ascending order according to the PDCCH monitoring period of the corresponding search space, the first CORESET group includes the 1st, ..., Kth CORESET in the reference CORESET pool, where K being a positive integer.

As an embodiment, the reference CORESET pool is arranged in ascending order for a PDCCH monitoring period of a respective search space, the first signaling being used to determine the second CORESET group from the reference CORESET pool.

As a sub-embodiment of the above embodiment, the first signaling is used to determine a first RS resource, the target CORESET pool includes at least one CORESET in addition to the CORESET(s) depends on by the first RS resource in the reference CORESET pool, and the second CORESET group includes the 1st, ..., Kth CORESET in the target CORESET pool, where K being a positive integer.

As a sub-embodiment of the above embodiment, the first signaling is used to determine a first RS resource group, the target CORESET pool includes at least one CORESET in addition to the CORESET(s) depends on by the any one of the RS resources of the first RS resource group in the reference CORESET pool, and the second CORESET group includes the 1st, ..., Kth CORESET in the target CORESET pool, where K being a positive integer.

As an embodiment, the K is indicated by the capabilityparametername.

As an embodiment, the K is a capability parameter of the first node.

As an embodiment, the K is determined according to the capability of the first node.

As an embodiment, the K is a sender of the first node reporting to the first higher layer message set.

As an embodiment, the K is configured by a sender of the first higher layer message set.

As an embodiment, the K is configured by a base station.

As an embodiment, the K is not greater than 2.

As an embodiment, the K is greater than 2.

As an embodiment, the K is equal to 1.

As an embodiment, any one of the RS resource in the third RS resource set depends on the TCI state of one of the CORESETs in the first CORESET sub-pool, and any one of the RS resource in the fourth RS resource set depends on the TCI state of one of the CORESETs in the second CORESET sub-pool; any one of the RS resource in the first RS resource set depends on the TCI state of one of the CORESETs in the first CORESET sub-pool, and any one of the RS resource in the second RS resource set depends on the TCI state of one of the CORESET in the second CORESET sub-pool.

As an embodiment, any one of the RS resource in the third RS resource set depends on the TCI state of one CORESET in the third CORESET group, the TCI state of any one of the CORESET in the third CORESET set is depended upon by one RS resource in the third RS resource set; the third CORESET group belongs to the first CORESET pool; any one of the RS resource in the fourth RS resource set depends on the TCI state of one CORESET in the fourth CORESET group, and the TCI state of any CORESET in the fourth CORESET group is depended upon by one RS resource in the fourth RS resource set; the fourth CORESET group belongs to the second CORES ET pool; any one of the RS resource in the first RS resource set depends on the TCI state of one CORESET in the fifth CORESET group, and the TCI state of any one of the CORESET in the fifth CORESET group is depended upon by one RS resource in the first RS resource set; the fifth CORESET group belongs to the first CORESET pool; any one of the RS resource in the second RS resource set depends on the TCI state of one CORESET in the sixth CORESET group, and the TCI state of any one of the CORESET in the sixth CORESET group is depended upon by one RS resource in the second RS resource set; the sixth CORESET group belongs to the second CORESET pool.

As an embodiment, the first signaling is used to determine whether the third CORESET group and the fifth CORESET group are the same and the first signaling is used to determine whether the fourth CORESET group and sixth CORESET group are the same.

As an embodiment, the first CORESET sub-pool is arranged in ascending order of the PDCCH monitoring period of the corresponding search space, and the third CORESET group includes the 1st, ..., Kth CORESET in the first CORESET pool, where K being a positive integer.

As an embodiment, the second CORESET sub-pool is arranged in ascending order according to the PDCCH monitoring period of the corresponding search space, and the fourth CORESET group includes the 1st, ..., Kth CORESET in the second CORESET sub-pool, K being a positive integer.

As an embodiment, the first CORESET sub-pool is ranked from small to large according to the PDCCH monitoring period of the corresponding search space, the first signaling being used to determine the fifth CORESET group from among the first CORESET sub-pool.

As a sub-embodiment of the above embodiment, the first signaling is used to determine a first RS resource, the first target CORESET sub-pool includes at least one CORESET other than the CORESET(s) that are depended upon by the first RS resource in the first CORESET sub-pool, the fifth CORESET group includes the first K CORESETs in the first target CORESET sub-pool, and K being a positive integer.

As a sub-embodiment of the above embodiment, the first signaling is used to determine the first RS resource group, the first target CORESET pool includes at least one CORESET in addition to the CORESET(s) that are depended upon by any one of the first RS resources group in the first CORESET sub-pool, the fifth CORESET group includes the first K CORESETs in the first target CORESET pool, and the K being a positive integer.

As an embodiment, the second CORESET sub-pool is ranked from small to large according to the PDCCH monitoring period of the corresponding search space, the first signaling being used to determine the sixth CORESET group from the second CORESET sub-pool.

As a sub-embodiment of the above embodiment, the first signaling is used to determine the first RS resource, the second target CORESET sub-pool includes at least one CORESET in addition to the CORESET(s) that are depended upon by the first RS resource in the second CORESET sub-pool, the sixth CORESET group includes the first K CORESETs in the second target CORESET sub-pool, and the K being a positive integer.

As a sub-embodiment of the above embodiment, the first signaling is used to determine the first RS resource group, and the second target CORESET pool includes at least one CORESET in addition to the CORESET(s) that are depended upon by any one of the RS resource of the first RS resource group in the second CORESET sub-pool. The sixth CORESET group includes the first K CORESETs in the second target CORESET pool, where the K being a positive integer.

As an embodiment, the first RS resource pool is configured for radio link quality assessment by the first higher layer message set.

As an embodiment, the radio link quality assessment is used for beam failure monitoring.

As an embodiment, the radio link quality assessment includes a determination as to whether the radio link quality is worse than the reference threshold.

As an embodiment, the radio link quality is an RSRP.

As an embodiment, the radio link quality is a L1-RSRP.

As an embodiment, the radio link quality is a SINR.

As an embodiment, the radio link quality is a L1-SINR.

As an embodiment, the radio link quality is a BERR.

As an embodiment, the radio link quality is a hypothetical BLER.

As an embodiment, the radio link quality of the first BWP is assessed only according to the second RS resource pool in the first RS resource pool and the second RS resource pool.

As an embodiment, the meaning of "assessing radio link quality according to a given RS resource pool" includes: assess the radio link quality based on all RS resources in a given RS resource pool.

As an embodiment, the radio link quality is one of RSRP, L1-RSRP, SINR or L1-SINR, and the meaning of "assessing the radio link quality according to a given RS resource pool" includes: the radio link quality is a maximum value in RSRP, L1-RSRP, SINR or L1-SINR based on a measurement of all of the RS resources in the given RS resource pool.

As an embodiment, the radio link quality is a BERR, and the meaning of "assessing the radio link quality according to a given RS resource pool" includes: the radio link quality is the minimum value of the BERR measured based on all of the RS resources in the given RS resource pool.

As an embodiment, the radio link quality is a hypothetical BERR, and the meaning of "assessing the radio link quality according to a given RS resource pool" includes: The radio link quality is a minimum of a hypothetical BERR based on all of the RS resources in the given RS resource pool.

As an embodiment, the radio link quality is one of RSRP, L1-RSRP, SINR or L1-SINR, and the meaning of "assessing the radio link quality according to a given RS resource pool" includes: The radio link quality is an average of the RSRP, L1-RSRP, SINR or L1-SINR based on a measurement of all of the RS resources in the given RS resource pool.

As an embodiment, the radio link quality is a BERR, and the meaning of "assessing the radio link quality according to a given RS resource pool" includes: The radio link quality is an average of BERRs measured based on all of the RS resources in the given RS resource pool.

As an embodiment, the radio link quality is a hypothetical BERR, and the meaning of "assessing the radio link quality according to a given RS resource pool" includes: The radio link quality is an average of the hypothetical BERRs measured based on all of the RS resources in the given RS resource pool.

As an embodiment, the given RS resource pool is the second RS resource.

As an embodiment, the given RS resource pool is the first RS resource set.

As an embodiment, the given RS resource pool is the second RS resource set.

As an embodiment, given CORESET is one CORESET in the first BWP; the meaning of the sentence "TCI state of a given RS resource depends on a given CORESET" includes: The given RS resource is not configured or activated by the first higher layer message set.

As an embodiment, given CORESET is one CORESET in the first BWP; the meaning of the sentence "TCI state of a given RS resource depends on a given CORESET" includes: The given RS resource is not configured or activated by the first higher layer message set; the given RS resource is the same as one of the RS resources in the first RS resource pool, or the given RS resource is different than any one of the RS resources in the first RS resource pool.

As an embodiment, given CORESET is one CORESET in the first BWP; the meaning of the sentence "TCI state of a given RS resource depends on a given CORESET" includes: The given RS resource is determined according to the TCI state of the given CORESET.

As an embodiment, given CORESET is one CORESET in the first BWP; the meaning of the sentence "TCI state of a given RS resource depends on a given CORESET" includes: The given RS resource is determined according to the first node monitoring the TCI state of the given CORESET used by PDCCH.

As an embodiment, given CORESET is one CORESET in the first BWP; the meaning of the sentence "TCI state of a given RS resource depends on a given CORESET" includes: The given RS resource is not configured or activated by the first higher layer message set; an index of the given RS resource is the same as an index of one of the RS resources indicated by a TCI state of the given CORESET.

As an embodiment, given CORESET is one CORESET in the first BWP; the meaning of the sentence "TCI state of a given RS resource depends on a given CORESET" includes: an index of the given RS resource is the same as the index of one of the RS resources indicated by the TCI state of the given CORESET.

As an embodiment, given CORESET is one CORESET in the first BWP; the meaning of the sentence "TCI state of a given RS resource depends on a given CORESET" includes: Given TCI state is the TCI state of the given CORESET used by PDCCH that monitored by the first node in the first BWP, the index for the given RS resource being the same as one of the RS resource indices in the RS resource set indicated by the given TCI state.

As an embodiment, given CORESET is one CORESET in the first BWP; the meaning of the sentence "TCI state of a given RS resource depends on a given CORESET" includes: The given RS resource is a periodic CSI-RS resource, and given TCI state is the TCI state of the given CORESET used by PDCCH that monitored by the first node in the first BWP, the index of the given RS resource being the same as one of the RS resource indices in the RS resource set indicated by the given TCI state.

As an embodiment, a given RS resource pool is the first RS resource pool, or a given RS resource pool is the third RS resource set; the meaning of the sentence "the first RS resource is associated with the given RS resource pool" includes: The first RS resource depends on the configuration of the first higher layer message set.

As an embodiment, a given RS resource pool is the first RS resource pool, or a given RS resource pool is the third RS resource set; the meaning of the sentence "the first RS resource is associated with the given RS resource pool" includes: The first RS resource belongs to the given RS resource pool.

As an embodiment, a given RS resource pool is the first RS resource pool, or a given RS resource pool is the third RS resource set; the meaning of the sentence "the first RS resource is associated with the given RS resource pool" includes: The first RS resource is associated with one of the RS resources in the given RS resource pool.

As an embodiment, a given RS resource pool is the first RS resource pool, or a given RS resource pool is the third RS resource set; the meaning of the sentence "the first RS resource is associated with the given RS resource pool" includes: The first RS resource and one of the RS resources in the given RS resource pool are Quasi Co-Location.

As an embodiment, a given RS resource pool is the first RS resource pool, or a given RS resource pool is the third RS resource set; the meaning of the sentence "the first RS resource is associated with the given RS resource pool" includes: The first RS resource and one of the given RS resource pool have the same Quasi Co-Location (QCL) parameters.

As an embodiment, a given RS resource pool is the first RS resource pool, or a given RS resource pool is the third RS resource set; the meaning of the sentence "the first RS resource is associated with the given RS resource pool" includes: The first RS resource has the same Quasi Co-Location relationship as one of the RS resources in the given RS resource pool.

As an embodiment, a given RS resource pool is the first RS resource pool, or a given RS resource pool is the third RS resource set; the meaning of the sentence "the first RS resource is associated with the given RS resource pool" includes: The first RS resource and one of the RS resources in the given RS resource pool have the same Quasi Co-Location hypothesis.

As an embodiment, a TCI state indicates at least one RS resource and the type of quasi co-location parameter corresponding to each RS resource.

As an embodiment, the type of the quasi co-location parameter includes TypeA, TypeB, TypeC, and TypeD.

As an embodiment, the quasi co-location parameters of type TypeA include a Doppler shift, a Doppler spread, an average latency delay, a delay spread.

As an embodiment, the quasi co-location parameters of type TypeB include a Doppler shift, a Doppler spread.

As an embodiment, the quasi co-location parameters of type TypeC include a Doppler shift, an average latency.

As an embodiment, the quasi co-location parameters of type TypeD include a spatial receiving parameter (Spatial Rx parameter).

As an embodiment, the TypeA, the TypeB, the TypeC and the TypeD are specifically defined in Section 5.1.5 of 3GPP TS38.214.

As an embodiment, the quasi co-location parameters include one or more of a delay spread, a Doppler spread, a Doppler shift, an average delay, or a spatial Rx parameter.

As an embodiment, the quasi co-location parameters include a Doppler shift, a Doppler spread.

As an embodiment, the quasi co-location parameters include a Doppler shift, an average delay.

As an embodiment, the quasi co-location parameters include a spatial Rx parameter.

As an embodiment, the quasi co-location parameters include at least one of a spatial transmission parameter or a spatial Rx parameter.

As an embodiment, the quasi co-location parameters include a spatial Domain Receive Filter.

As an embodiment, the quasi co-location parameters include a spatial domain filter.

As an embodiment, the quasi co-location parameters include at least one of a spatial domain transmit filter or a spatial domain receive filter.

As an embodiment, the meaning of the phrase "two RS resources are quasi co-location" includes: the quasi co-location parameters of the two RS resources are the same; the meaning of the sentence "two RS resources are not quasi co-location" includes: the quasi co-location parameters for the two RS resources are not the same.

As an embodiment, the meaning of the phrase "two RS resources are quasi co-location" includes: the first node device assumes that the same quasi co-location parameter is used to receive the two RS resources; the meaning of the sentence "two RS resources are not quasi co-location" includes: the first node device does not assume that the same quasi co-location parameters are used to receive the two RS resources.

As an embodiment, the meaning of the phrase "two RS resources are quasi co-location" includes: The first node device assumes that the same quasi co-location parameters are used to send or receive the two RS resources; the meaning of the phrase "two RS resources are not quasi co-location" includes: the first node device does not assume that the same quasi co-location parameters are used to send or receive the two RS resources.

As an embodiment, the meaning of the phrase "two RS resources are quasi co-location" includes: the two RS resources have the same quasi co-location characteristics; the meaning of the phrase "two RS resources are quasi co-location" includes: the two RS resources have different quasi co-location characteristics.

As an embodiment, the meaning of the phrase "two RS resources are quasi co-location" includes: the two RS resources have the same spatial receiving parameter (Spatial Rx parameter); the meaning of the phrase "two RS resources are not quasi co-location" includes: the two RS resources have different spatial receiving parameters.

As an embodiment, the meaning of the phrase "two RS resources are quasi co-location" includes: the two RS resources have the same quasi co-location relationship; the meaning of the phrase "two RS resources are quasi co-location" includes: the two RS resources have different quasi co-location relationships.

As an embodiment, the meaning of the phrase "two RS resources are quasi co-location" includes: the two RS resources have the same quasi co-location hypothesis; the meaning of the phrase "two RS resources are quasi co-location" includes: the two RS resources have different quasi co-location assumptions.

### Embodiment 6

Embodiment 6 exemplifies a schematic diagram of a first signaling according to one embodiment of the present application; as shown in FIG. 6.

In Embodiment 6, the first signaling is used to determine a first RS resource, and the first RS resource is associated with the first RS resource pool.

As an embodiment, the first signaling is used to indicate the first RS resource.

As an embodiment, the first RS resource is deactivated.

As an embodiment, the first signaling is used to indicate that the first node is not required to measure the first RS resource of the measurement.

As an embodiment, the first node is not required to measure the first RS resource of the measurement as a response to receiving the first signaling.

As an embodiment, the first signaling is used to indicate a first RS resource group, the first RS resource being one of RS resources in the first RS resource groups.

As an embodiment, the first signaling is used to indicate a first value, and the first value is used to indicate the first RS resource.

As an embodiment, the first signaling is used to indicate a first value, and the first value is used to indicate a first RS resource group, and the first RS resource being one of the RS resources in the first RS resource group.

As an embodiment, the first signaling is used to indicate a first value, the first value is used to determine the first RS resource.

As an embodiment, the first signaling is used to indicate a first value, the first value is used to determine a first RS resource group, and the first RS resource is one of the RS resources in the first RS resource group.

As an embodiment, the meaning of the sentence "the first value is used to determine the first RS resource" includes: The first value indicates an index of the first RS resource.

As an embodiment, the meaning of the sentence "the first value is used to determine the first RS resource" includes: The first value and the first RS resource have a corresponding relationship.

As an embodiment, the meaning of the sentence "the first value is used to determine the first RS resource" includes: The first value is associated with the first RS resource.

As an embodiment, the meaning of the sentence "the first value is used to determine the first RS resource group" includes: The first value indicates an index of the first RS resource group.

As an embodiment, the meaning of the sentence "the first value is used to determine the first RS resource group" includes: The first value indicates an index of each RS resource included by the first RS resource group.

As an embodiment, the meaning of the sentence "the first value is used to determine the first RS resource group" includes: The first value and the first RS resource group have a corresponding relationship.

As an embodiment, the meaning of the sentence "the first value is used to determine the first RS resource group" includes: The first value is associated with the first RS resource group.

As an embodiment, the first signaling is a DCI and one domain of the first signaling is used to indicate the first RS resource.

As an embodiment, the first signaling is a DCI, and a plurality of domains in the first signaling are collectively used to indicate the first RS resource.

As an embodiment, "an RS resource is deactivated" is meant to include: the first node does not measure the RS resource of the measurement.

As an embodiment, "an RS resource is deactivated" is meant to include: the first node releases the RS resource.

As an embodiment, "an RS resource is deactivated" is meant to include: the first node believes that the RS resource is not present.

As an embodiment, "an RS resource is activated" is meant to include: the first node measure the RS resource of the measurement.

As an embodiment, "an RS resource is activated" is meant to include: the first node believes that the RS resource exists.

### Embodiment 7

Embodiment 7 exemplifies a schematic diagram of a second RS resource according to one embodiment of the present application; as shown in FIG. 7.

In embodiment 7, at least one RS resource of the second RS resource pool depends on the configuration of the first higher layer message set.

As an embodiment, only one of the RS resources in the second RS resource pool depends on the configuration of the first higher layer message set.

As an embodiment, part of the RS resources in the second RS resource pool depends on the configuration of the first higher layer message set.

As an embodiment, at least one of the RS resources in the second RS resource pool is not configured or activated by the first higher layer message set.

As an embodiment, a given RS resource is an RS resource in the second RS resource pool, and the meaning of the sentence "the configuration of the first higher layer message set upon which the given RS resource depends" includes: The index of the given RS resource is configured or activated by the first higher layer message set.

As an embodiment, a given RS resource is an RS resource in the second RS resource pool, and the meaning of the sentence "the configuration of the first higher layer message set upon which the given RS resource depends" includes: The index of the given RS resource is not configured or activated by the first higher layer message set, and the index of the given RS resource is the same as one of the first higher layer message set configurations or activations.

As an embodiment, a given RS resource is an RS resource in the second RS resource pool, and the meaning of the sentence "the configuration of the first higher layer message set upon which the given RS resource depends" includes: The index of the given RS resource is determined based on at least one RS resource index of the RS resource set indicated by the first node monitoring at least one CORESET of a TCI state used by PDCCH, the index of the given RS resource being the same as one index configured or activated by the first higher layer message set.

As an embodiment, a given RS resource is an RS resource in the second RS resource pool, and the meaning of the sentence "the configuration of the first higher layer message set upon which the given RS resource depends" includes: The index of the given RS resource is the same as one of the first higher layer message set configurations or activations.

As an embodiment, a given RS resource is an RS resource in the second RS resource pool, and the meaning of the sentence "the configuration of the first higher layer message set upon which the given RS resource depends" includes: The given RS resource belongs to the first RS resource pool.

As an embodiment, a given RS resource is an RS resource in the second RS resource pool, and the meaning of the sentence "the configuration of the first higher layer message set upon which the given RS resource depends" includes: The index of the given RS resource is the same as the index of one of the RS resources in the first RS resource pool.

As an embodiment, a given RS resource is an RS resource in the second RS resource pool, and the meaning of the sentence "the configuration of the first higher layer message set upon which the given RS resource depends" includes: The given RS resources and one RS resource in the first RS resource pool is Quasi Co-Location.

### Embodiment 8

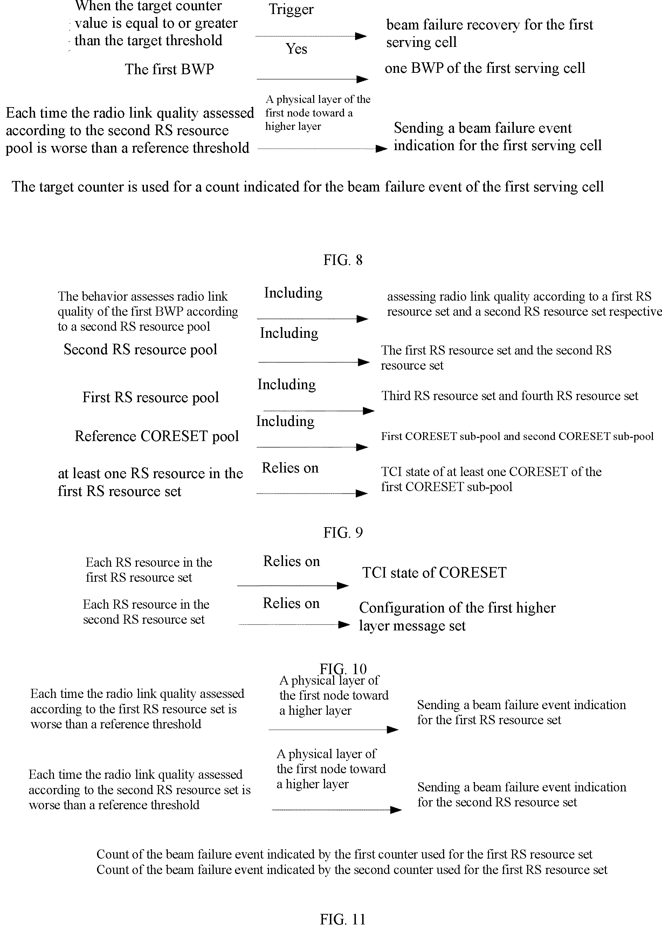

Embodiment 8 exemplifies a schematic diagram of a beam failure recovery of a first serving cell according to one embodiment of the present application; as shown in FIG. 8.

In Embodiment 8, when the target counter value is equal to or greater than the target threshold, the first node in the present application triggers a beam failure recovery for the first serving cell; wherein the first BWP is a BWP for the first serving cell; and each time the radio link quality assessed according to the second RS resource pool is worse than a reference threshold, the physical layer of the first node sends a beam failure event indication for the first serving cell to a higher layer; the target counter is used for the count of the beam failure event indicated for the first serving cell.

As an embodiment, the radio link quality is one of RSRP, L1-RSRP, SINR or L1-SINR; the meaning of the phrase "the radio link quality assessed according to the second RS resource pool is worse than the reference threshold" includes: the radio link quality assessed according to the second RS resource pool is less than the reference threshold.

As a sub-embodiment of the above embodiment, the unit of the reference threshold is dBm or dB.

As an embodiment, the radio link quality is BERR; the meaning of the phrase "the radio link quality assessed according to the second RS resource pool is worse than a reference threshold" includes: the radio link quality assessed according to the second RS resource pool is greater than the reference threshold.

As a sub-embodiment of the above embodiment, the reference threshold is a BERR threshold.

As an embodiment, the radio link quality is a hypothetical BERR; the meaning of the phrase "the radio link quality assessed according to the second RS resource pool is worse than a reference threshold" includes: the radio link quality assessed according to the second RS resource pool is greater than the reference threshold.

As an embodiment, the reference threshold is a real number.

As an embodiment, the reference threshold is a non-negative real number.

As an embodiment, the reference threshold is a non-negative number not greater than 1.

As an embodiment, the reference threshold is a Qout_L.

As an embodiment, the reference threshold is one of a Qout_L, Qout_LR_SSB, or a Qout_LR_CSI-RS.

As an embodiment, Qout_LR, Qout_LR_SSB, and Qout_LR_CSI-RS are defined in 3GPP TS38.133.

As an embodiment, the reference threshold is configured by the RRC parameter, rmInSyncOutOfSyncThreshold.

As an embodiment, the reference threshold is the default value of the a rmInSyncOutOfSyncThreshold.

As an embodiment, the specific definition of the rmInSyncOutOfSyncThreshold is described in Section 6 of 3GPP TS38.213.

As an embodiment, the definition of the rmInSyncOutOfSyncThreshold is described in 3GPP TS38.133.

Typically, the meaning of the sentence "when the target counter's value is equal to or greater than the target threshold" includes: When and only when the target counter value is equal to or greater than the target threshold.

Typically, the meaning of the sentence "when the target counter's value is equal to or greater than the target threshold" includes: Response that the value of the target counter is equal to or greater than the target threshold.

Typically, the first node maintains the target counter at the MAC layer.

Typically, the target counter is maintained by a MAC entity of the first node.

Typically, whenever the MAC entity of the first node receives a beam failure event indication from the physical layer for the first serving cell, the start or restart target timer is started and the value of the target counter is increased by 1.

Typically, the target counter is a BFI_COUNTER.

As an embodiment, the first node device includes:
as a response to receiving the first signaling, setting the target counter to 0.

As an embodiment, start or restart the target timer as a response to receiving the first signaling.

Typically, when the target timer expire, the target counter is set to 0.

Typically, the target timer is a BeamFailureDetectionTimer.

As an embodiment, the target counter is BFI_COUNTER.

As an embodiment, the initial value of the target counter is 0.

As an embodiment, the target threshold being a positive integer.

As an embodiment, the target threshold is a BeamFailureInstanceMaxCount.

As an embodiment, the target threshold is configured by an RRC parameter.

As an embodiment, the RRC parameters for configuring the target threshold includes all or part of the information from the beamFailureInstanceMaxCount domain of the RadioLinkMonitoringConfig IE.

As an embodiment, the target timer is a BeamFailureDetectionTimer.

As an embodiment, the initial value of the target timer being a positive integer.

As an embodiment, the initial value of the target timer is a positive real number.

As an embodiment, the unit of the initial value of the target timer is the Qout of the beam failure detection RS and the LR reporting period.

As an embodiment, the initial value of the target timer is configured by the higher layer parameter beamFailureDetectionTimer.

As an embodiment, the initial value of the target timer is configured by an IE.

As an embodiment, the name of the IE that configures the initial value of the target timer includes a RadioLinkMonitoring.

As an embodiment, when a beam failure recovery for the first serving cell is triggered, the beam failure recovery process for the first serving cell includes sending the first signal.

As an embodiment, the first signal includes at least one of contention-based Random Access Preamble, BFR MAC CE, Truncated BFR MAC CE, Enhanced BFR MAC CE, or Truncated Enhanced BFR MAC CE.

As an embodiment, the Beam Failure Recovery (BFR) for the first serving cell includes a random access process.

As an embodiment, the Beam Failure Recovery (BFR) for the first serving cell includes at least one of sending a random access leader, sending a BFR MAC CE, sending a Truncated BFR MAC CE, sending an Enhanced BFR MAC CE, or sending Truncated Enhanced BFR MAC CE.

As an embodiment, the random access leader is based on a contention-based Random Access Preamble.

As an embodiment, the random access leader is a contention-free Random Access Preamble.

As an embodiment, the Beam Failure Recovery (BFR) for the first serving cell includes sending one of a BFR MAC CE, a Truncated BFR MAC CE, an Enhanced BFR MAC CE, or a Truncated Enhanced BFR MAC CE.

As an embodiment, the Beam Failure Recovery (BFR) for the first serving cell includes sending a MAC CE whose name includes a BFR.

As an embodiment, the beam failure recovery process is described in Section 5.17 of 3GPP TS38.321.

As an embodiment, the beam failure recovery process is described in Section 6 of 3GPP TS38.213.

### Embodiment 9

Embodiment 9 exemplifies a schematic diagram of a first RS resource set and a second RS resource set according to one embodiment of the present application; as shown in FIG. 9.

In Example 9, the behavior of assessing the radio link quality of the first BWP according to the second RS resource pool comprises: assessing radio link quality according to a first RS resource set and a second RS resource set, respectively; wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

As an embodiment, any one of the RS resource in the first RS resource set depends on the TCI state of one of the first CORESET sub-pools.

As an embodiment, part of the RS resources in the first RS resource set depends on the TCI state of CORESET(s) in the first CORESET sub-pool.

As an embodiment, at least one of the RS resources of the second RS resource set depends on the configuration of the first higher layer message set.

As an embodiment, at least one RS resource in the second RS resource set depends on the TCI state of at least one CORESET in the second CORESET sub-pool.

As an embodiment, each RS resource in the second RS resource set depends on the TCI state of at least one CORESET in the second CORESET sub-pool.

As an embodiment, each RS resource in the first RS resource set depends on a TCI state of at least one CORESET in the first CORESET sub-pool and each RS resource in the second RS resource set depends on a TCI state of at least one CORESET in the second CORESET sub-pool.

Typically, the third RS resource set and the fourth RS resource set are configured or activated for radio link quality assessment by the first higher layer message set, respectively.

Typically, the first RS resource set and the third RS resource set correspond, the second RS resource set and fourth RS resource set correspond.

Typically, the first RS resource set and the third RS resource set correspond to a first CORESET sub-pool and the second RS resource set and the fourth RS resource set correspond to a second COREST sub-pool.

Typically, the index of the first CORESET sub-pool is 0 and the index of the second CORESET sub-pool is 1.

Typically, the first CORESET sub-pool includes at least one CORESET with a corresponding CORESETPoolIndex of 0, and the second CORESET sub-pool includes at least one CORESET with a corresponding CORESETPoolIndex of 1.

As an embodiment, the first signaling is used to determine a first RS resource, and the first RS resource associated with the third RS resource set.

Typically, the first higher layer message set includes a first RRC message and a second RRC message, the third RS resource set configured by the first RRC message, and the fourth RS resource set configured by the second RRC message.

As an embodiment, the first RRC message includes the failureDetectionSet1 domain in RRC IE RadioLinkMonitoringConfig, and the second RRC message includes the failureDetectionSet2 domain in RRC IE RadioLinkMonitoringConfig.

As an embodiment, the first RRC message is used to configure the first CORESET sub-pool and the second RRC message is used to configure the second CORESET sub-pool.

### Embodiment 10

Embodiment 10 exemplifies a schematic diagram of a first RS resource set and the second RS resource set according to another embodiment of the present application; as shown in FIG. 10.

In Embodiment 10, each of the RS resources in the first RS resource set depends on the TCI state of CORESET and each of the RS resources in the second RS resource set depends on the configuration of the first higher layer message set.

As an embodiment, the meaning of the sentence "a RS resource depends on a TCI state of a CORESET" includes: The one RS resource is not configured or activated by the first higher layer message set.

As an embodiment, the meaning of the sentence "a RS resource depends on a TCI state of a CORESET" includes: The one RS resource is not configured or activated by the first higher layer message set; the one RS resource is the same as one of the first RS resource pool, or the one RS resource is different than any one of the first RS resource pool.

As an embodiment, the meaning of the sentence "a RS resource depends on a TCI state of a CORESET" includes: The one RS resource is determined according to the TCI state of one CORESET.

As an embodiment, the meaning of the sentence "a RS resource depends on a TCI state of a CORESET" includes: The one RS resource is determined according to the TCI state of one CORESET used by the first node to monitor PDCCH.

As an embodiment, the meaning of the sentence "a RS resource depends on a TCI state of a CORESET" includes: The one RS resource is determined according to the TCI state of at least one CORESET used by the first node to monitor PDCCH.

As an embodiment, the meaning of the sentence "a RS resource depends on a TCI state of a CORESET" includes: The one RS resource is not configured or activated by the first higher layer message set; the index of the one RS resource is the same as the index of the one RS resource indicated by the TCI state of one CORESET.

As an embodiment, the meaning of the sentence "a RS resource depends on a TCI state of a CORESET" includes: The index of the one RS resource is the same as the index of the one RS resource indicated by the TCI state of one CORESET.

As an embodiment, the meaning of the sentence "a RS resource depends on a TCI state of a CORESET" includes: The index of the one RS resource is the same as the index of the one RS resource indicated by the TCI state of one CORESET.

As an embodiment, the meaning of the sentence "a RS resource depends on a TCI state of a CORESET" includes: The index of the RS resource is the same as an RS resource index in an RS resource set indicated by a TCI state of a CORESET used by the first node to monitor the PDCCH in the first BWP.

As an embodiment, the meaning of "an RS resource depends on the configuration of the first higher layer message set" includes: The one RS resource is configured or activated by the first higher layer message set.

As an embodiment, the meaning of "an RS resource depends on the configuration of the first higher layer message set" includes: The one RS resource is not configured or activated by the first higher layer message set, the index of the one RS resource is the same as the index of one RS resource in the first RS resource pool.

As an embodiment, the meaning of "an RS resource depends on the configuration of the first higher layer message set" includes: The first higher layer message set includes an index of the one RS resource.

As an embodiment, the meaning of "an RS resource depends on the configuration of the first higher layer message set" includes: The first higher layer message set includes an index of the one RS resource.

### Embodiment 11

Embodiment 11 exemplifies a schematic diagram of a beam failure event indication for a first RS resource set and a beam failure event indication for a second RS resource set according to one embodiment of the present application; as shown in FIG. 6.

In Embodiment 11, whenever the radio link quality assessed based on the first RS resource set is worse than a reference threshold, the physical layer of the first node sends a beam failure event indication for the first RS resource set to a higher layer; when the radio link quality assessed based on the second RS resource set is worse than the reference threshold, the physical layer of the first node sends a beam failure event indication for the second RS resource set to a higher layer; a first counter is used to count the beam failure event indications for the first RS resource set, and a second counter is used to count the beam failure event indications for the second RS resource set.

Typically, the statistics for the beam failure instance indication for the first RS resource set and the statistics for the beam failure instance indication for the second RS resource set are performed separately.

Typically, the beam failure detection for the first RS resource set and the beam failure detection for the second RS resource set are performed separately.

Typically, the beam failure recovery of the first RS resource set and the beam failure recovery of the second RS resource set are triggered, respectively.

Typically, the first RS resource set and the second RS resource set are 2 beam failure detection RS sets, and the beam failure detection is performed per beam failure detection RS sets.

Typically, the first RS resource set and the second RS resource set are two beam failure detection RS sets, and the beam failure recovery is performed per beam failure detection RS sets.

Typically, the first RS resource set and the second RS resource set correspond to two BFI_COUNTERs, respectively.

Typically, the first RS resource set corresponds to a first counter and the second RS resource set corresponds to a second counter.

Typically, when the value of the first counter is equal to or greater than the first threshold, a beam failure recovery for the first RS resource set is triggered; and a BFR for the second RS resource set is triggered when the value of the second counter is equal to or greater than the second threshold.

Typically, the meaning of the sentence "when the value of the first counter is equal to or greater than the first threshold" includes: when and only when the value of the first counter is equal to or greater than the first threshold.

Typically, the meaning of the sentence "when the value of the first counter is equal to or greater than the first threshold" includes: response having a value equal to or greater than a first threshold as a value of a first counter.

Typically, the meaning of the sentence "when the value of the second counter is equal to or greater than the second threshold" includes: when and only when the value of the second counter is equal to or greater than the second threshold.

Typically, the meaning of the sentence "when the value of the second counter is equal to or greater than the second threshold" includes: response having a value equal to or greater than a second threshold as a second counter.

As an embodiment, the first node device includes:
setting the first counter to 0 as a response to receiving the first signaling;
wherein at least one of the RS resources in the first RS resource set depends on the TCI state of CORESET.

As an embodiment, the first node device includes:
setting the second counter to 0 as a response to receiving the first signaling;
wherein at least one RS resource in the second RS resource set depends on the TCI state of CORESET.

As an embodiment, the first node device includes:
setting the first counter to 0 and setting the second counter to 0 as a response to receiving the first signaling;
wherein at least one RS resource in the first RS resource set depends on the TCI state of CORESET and at least one RS resource in the second RS resource set depends on the TCI state of CORESET.

Typically, the first node maintains the first counter at the MAC layer and the first node maintains the second counter at the MAC layer.

Typically, the MAC entity of the first node maintains the first counter and the MAC entity of the first node maintains the second counter.

Typically, each time the MAC entity of the first node receives a beam failure event indication from the physical layer for the first RS resource set, the first timer start or restart and the value of the first counter is increased by 1; each time the MAC entity of the first node receives a beam failure event indication from the physical layer for the second RS resource set, start or restart second timer is increased by 1.

Typically, the first counter and the second counter are 2 BFI_COUNTER.

As an embodiment, start or restart the first timer as a response to receiving the first signaling;
wherein at least one of the RS resources in the first RS resource set depends on the TCI state of CORESET.
as an embodiment, start or restart the second timer as a response to receiving the first signaling;
wherein at least one RS resource in the second RS resource set depends on the TCI state of CORESET.
as an embodiment, start or restart the first timer and start or restart the second timer as a response to receiving the first signaling;
wherein at least one RS resource in the first RS resource set depends on the TCI state of CORESET and at least one RS resource in the second RS resource set depends on the TCI state of CORESET.

Typically, when the first timer expire, set the first counter to 0; and when the second timer expire, set the second counter to 0.

As an embodiment, the first timer and the second timer are 2 beamFailureDetectionTimer.

Typically, the initial value of the first counter is 0 and the initial value of the second counter is 0.

As an embodiment, the first threshold being a positive integer and the second threshold being a positive integer.

As an embodiment, the first threshold and the first threshold are the configured beamFailureInstanceMaxCount-r17, respectively.

As an embodiment, the name of the first threshold includes a beamFailureInstanceMaxCount, and the name of the second threshold includes a beamFailureInstanceMax Count.

As an embodiment, the first threshold and the second threshold are configured by RRC parameters, respectively.

As an embodiment, the first threshold and the second threshold are the same.

As an embodiment, the first threshold and the second threshold are different.

As an embodiment, the first threshold and the second threshold are configured by part or all domains in a RRC IE.

As an embodiment, the RRC message that configures the first threshold and the second threshold includes two BeamFailureInstanceMaxCount-r17 domains of the RadioLinkMonitoringConfig IE.

As an embodiment, the RRC message that configures the first threshold and the second threshold includes part or all information in the two failureDetectionSet1-r17 domains of RadioLinkMonitoringConfig IE, respectively.

As an embodiment, the RRC message for configuring the first threshold and the second threshold includes a name in the RadioLinkMonitoringConfig IE including part or all information in the domain of the failureDetectionSet1, and the RRC message for configuring the first threshold and the second threshold include a name in the RadioLinkMonitoringConfig IE including part or all information in the domain of the failureDetectionSet2.

As an embodiment, the initial values of the first timer and the initial values of the second timer are the same.

As an embodiment, the initial values of the first timer and the initial values of the second timer are different.

As an embodiment, the initial values of the first timer and the initial values of the second timer are configured by the RRC parameters, respectively.

As an embodiment, the first timer and the second timer are 2 beamFailureDetectionTimer-r17, respectively.

As an embodiment, both the name of the first timer and the second timer include the beamFailureDetectionTimer-r17.

As an embodiment, the initial value of the first timer being a positive integer and the initial value of the second timer being a positive integer.

As an embodiment, the initial value of the first timer is a positive real number and the initial value of the second timer is a positive real number.

As an embodiment, both the unit of the initial value of the first timer and the unit of the initial value of the second timer are the Qout of the beam failure detection RS and the LR reporting period.

As an embodiment, the initial value of the first timer and the initial value of the first timer are configured by the 2 higher layer parameters beamFailureDetectionTimer-r17, respectively.

As an embodiment, the initial value of the first timer and the initial value of the second timer are configured by 2 names including the higher layer parameters of the beamFailureDetectionTimer-r17, respectively.

As an embodiment, the initial value of the first timer and the initial value of the second timer are configured by an IE.

As an embodiment, the name of the IE that configures the initial value of the first timer and the initial value of the second timer includes RadioLinkMonitoring.

Typically, when both the beam failure recovery for the first RS resource set and the beam failure recovery for the second RS resource set are triggered and neither the first RS resource set nor the beam failure recovery process for the second RS resource set is successfully completed, initiate random access process.

As an embodiment, the Beam Failure Recovery (BFR) for the first RS resource set includes sending one of BFR MAC CE, Truncated BFR MAC CE, Enhanced BFR MAC CE or Truncated Enhanced BFR MAC CE; the Beam Failure Recovery (BFR) for the second RS resource set includes sending one of BFR MAC CE, Truncated BFR MAC CE, Enhanced BFR MAC CE or Truncated Enhanced BFR MAC CE.

As an embodiment, the Beam Failure Recovery (BFR) for the first RS resource set includes sending a MAC CE whose name includes a BFR and the Beam Failure Recovery (BFR) for the second RS resource set includes sending a MAC CE whose name includes a BFR.

### Embodiment 12

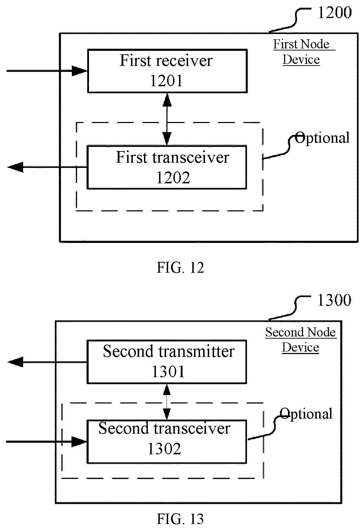

Embodiment 12 exemplifies a structural block diagram of a processing apparatus for use in a first node device according to one embodiment of the present application; as shown in FIG. 12. In FIG. 12, the processing apparatus 1200 in the first node device includes at least the first receiver 1201 in the first receiver 1201 or the first transceiver 1202, wherein the first transceiver 1202 is optional.

As an embodiment, the first node device is an user equipment.

As an embodiment, the first node device is a relay node device.

As an embodiment, the first receiver 1201 includes at least one of {the antenna 452, the receiver 454, the receiving processor 456, the multi-antenna receiving processor 458, the controller/processor 459, the memory 460, the data source 467} of Embodiment 4.

As an embodiment, the first transmitter 1202 includes at least one of {the antenna 452, the transmitter/receiver 454, the receiving processor 456, the transmitting processor 468, the multi-antenna receiving processor 458, the multi-antenna transmitting processor 457, the controller/processor 459, the memory 460, the data source 467} of Embodiment 4.
a first receiver 1201 receiving a first higher layer message set, the first higher layer message set being used to configure a first RS resource pool for a first BWP, the first RS resource pool being used for radio link quality assessment; receiving a first signaling, the protocol layer to which the first signaling belongs is a protocol layer under the RRC layer; as a response to receiving the first signal, the radio link quality of the first BWP is assessed according to the second RS resource pool;

In Embodiment 12, at least one of the RS resources of the second RS resource pool depends on the TCI state of CORESET.

As an embodiment, the first signaling is used to determine a first RS resource, and the first RS resource associated with the first RS resource pool.

As an embodiment, at least one RS resource of the second RS resource pool depends on the configuration of the first higher layer message set.

As an embodiment, the first node device includes:
a first transceiver 1202 that triggering a beam failure recovery for the first serving cell when the target counter value is equal to or greater than the target threshold;
wherein the first BWP is a BWP of the first serving cell; whenever the radio link quality assessed according to the second RS resource pool is worse than a reference threshold, the physical layer of the first node sends a beam failure event indication for the first serving cell to a higher layer; the target counter is used for a count of the beam failure event indication for the first serving cell.

As an embodiment, the behavior of assessing the radio link quality of the first BWP according to a second RS resource pool comprises: assessing radio link quality according to a first RS resource set and a second RS resource set respectively;
wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

As an embodiment, each RS resource in the first RS resource set depends on the TCI state of CORESET and each RS resource in the second RS resource set depends on the configuration of the first higher layer message set.

As an embodiment, whenever the radio link quality assessed based on the first RS resource set is worse than a reference threshold, the physical layer of the first node sends a beam failure event indication for the first RS resource set to a higher layer; when the radio link quality assessed based on the second RS resource set is worse than the reference threshold, the physical layer of the first node sends a beam failure event indication for the second RS resource set to a higher layer; a first counter is used to count the beam failure event indications for the first RS resource set, and a second counter is used to count the beam failure event indications for the second RS resource set.

As an embodiment, the first node device includes:
the first transceiver 1202, sending a first signal;
wherein a beam failure recovery for the first serving cell is triggered; and a beam failure recovery process for the first serving cell includes sending the first signal.

### Embodiment 13

Embodiment 13 exemplifies a structural block diagram of a processing apparatus for use in a second node device, according to one embodiment of the present application; as shown in FIG. 13. In FIG. 13, the processing apparatus 1300 in the second node device includes the second transmitter 1301 or at least the second transmitter 1301 in the second transceiver 1302, where the second transceiver 1302 is optional.

As an embodiment, the second node device is a base station device.

As an embodiment, the second node device is an user equipment.

As an embodiment, the second node device is a relay node device.

As an embodiment, the second transmitter 1301 includes at least one of {the antenna 420, the transmitter 418, the transmitting processor 416, the multi-antenna transmitting processor 471, the controller/processor 475, the memory 476} of Embodiment 4.

As an embodiment, the second receiver 1302 includes at least one of {the antenna 420, the transmitter/receiver 418, the transmitting processor 416, the receiving processor 470, the multi-antenna transmitting processor 471, the multi-antenna receiving processor 472, the controller/processor 475, the memory 476} of Embodiment 4.
a second transmitter 1301 sending a first higher layer message set, the first higher layer message set being used to configure a first RS resource pool for a first BWP, the first RS resource pool being used for radio link quality assessment; sending a first signaling, the protocol layer to which the first signaling belongs is a protocol layer under the RRC layer;

In Embodiment 13, as a response of the receiver of the first signaling to receive the first signaling, the receiver of the first signaling assesses the radio link quality of the first BWP based on the second RS resource pool; at least one RS resource in the second RS resource pool depends on the TCI state of the CORESET.

As an embodiment, the first signaling is used to determine a first RS resource, and the first RS resource associated with the first RS resource pool.

As an embodiment, at least one RS resource of the second RS resource pool depends on the configuration of the first higher layer message set.

As an embodiment, the receiver of the first signaling triggers a beam failure recovery for a first serving cell when the value of the target counter is equal to or greater than the target threshold; wherein the first BWP is a BWP for the first serving cell; and whenever the radio link quality assessed according to the second RS resource pool is worse than a reference threshold, the physical layer of the receiver of the first signaling sends a beam failure event indication for the first serving cell to a higher layer of the receiver; the target counter is used to count the beam failure event indications for the first serving cell.

As an embodiment, assessing the radio link quality of the first BWP according to a second RS resource pool by the receiver of the behavior of the first signaling comprises: the receiver of the first signaling assesses radio link quality according to a first RS resource set and a second RS resource set respectively;
wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

As an embodiment, each RS resource in the first RS resource set depends on the TCI state of CORESET and each RS resource in the second RS resource set depends on the configuration of the first higher layer message set.

As an embodiment, whenever the radio link quality assessed based on the first RS resource set is worse than a reference threshold, the physical layer of the receiver of the first node sends a beam failure event indication for the first RS resource set to a higher layer of the receiver of the first node; when the radio link quality assessed based on the second RS resource set is worse than the reference threshold, the physical layer of the receiver of the first node sends a beam failure event indication for the second RS resource set to a higher layer of the receiver of the first node; a first counter is used to count the beam failure event indications for the first RS resource set, and a second counter is used to count the beam failure event indications for the second RS resource set.

As an embodiment, the second node device includes:
a second transceiver 1302, receiving a first signal;
wherein a beam failure recovery for the first serving cell is triggered; the beam failure recovery process for the first serving cell includes sending the first signaling to the receiver of the first signaling.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user equipment, terminals, and UEs in the present application include but are not limited to drones, communication modules on drones, remotely controlled aircraft, aircraft, small aircraft, cell phones, tablets, notebooks, in-vehicle communication devices, wireless sensors, network cards, IoT terminals, RFID terminals, NB-IOT terminals, MTC (Machine Type Communication) terminals, eMTC (enhanced MTC) terminals, data cards, Internet cards, in-vehicle communication devices, low-cost mobile phones, low-cost tablet computers, and other wireless communication devices. The base stations or system devices in the present application include, but are not limited to, macrocellular base stations, micro cell base stations, femtocell base stations, relay base stations, gNB NR node B, Transmitter Receiver Point (TRP), and other wireless communication devices.

The foregoing is merely a preferred embodiment of the present application and is not intended to limit the protective scope of the present application. Any changes and modifications made based on the embodiments described in the specification shall be deemed to be apparent and within the protective scope of the present invention if similar partial or all technical effects are obtained.

## Claims

1. A first node device for wireless communication, wherein it comprising:
a first receiver receiving a first higher layer message set, the first higher layer message set being used to configure a first RS resource pool for a first BWP, the first RS resource pool being used for radio link quality assessment; receiving a first signaling, the protocol layer to which the first signaling belongs is a protocol layer under the RRC layer; as a response to receiving the first signal, the radio link quality of the first BWP is assessed according to the second RS resource pool;
wherein at least one RS resource of the second RS resource pool depends on the TCI state of CORESET.

2. The first node device according to Claim 1, wherein the first signaling is used to determine a first RS resource, and the first RS resource associated with the first RS resource pool.

3. The first node device according to Claim 1 or 2, wherein at least one RS resource in the second RS resource pool depends on the configuration of the first higher layer message set.

4. The first node device according to any one of Claims 1 to 3, wherein it comprising:
a first transceiver that triggering a beam failure recovery for the first serving cell when the target counter value is equal to or greater than the target threshold;
wherein the first BWP is a BWP of the first serving cell; whenever the radio link quality assessed according to the second RS resource pool is worse than a reference threshold, the physical layer of the first node sends a beam failure event indication for the first serving cell to a higher layer; the target counter is used for a count of the beam failure event indication for the first serving cell.

5. The first node device according to any one of Claims 1-3, wherein the behavior assess the radio link quality of the first BWP according to a second RS resource pool comprises: assessing radio link quality according to a first RS resource set and a second RS resource set respectively;
wherein the second RS resource pool comprises a first RS resource set and a second RS resource set; the first RS resource pool comprise a third RS resource set and a fourth RS resource set; and reference CORESET pool comprise a plurality of CORESETs configured to the first BWP, the reference CORESET pool comprises a first CORESET sub-pool and a second CORESET sub-pool, the first CORESET sub-pool comprises at least one CORESET, the second CORESET sub-pool comprises at least one CORESET; at least one RS resource of the first RS resource set depends on the TCI state of at least one CORESET in the first CORESET sub-pool.

6. The first node device according to Claim 5, wherein each RS resource in the first RS resource set depends on the TCI state of CORESET and each RS resource in the second RS resource set depends on the configuration of the first higher layer message set.

7. The first node device according to Claim 5 or 6, wherein whenever the radio link quality assessed based on the first RS resource set is worse than a reference threshold, the physical layer of the first node sends a beam failure event indication for the first RS resource set to a higher layer; when the radio link quality assessed based on the second RS resource set is worse than the reference threshold, the physical layer of the first node sends a beam failure event indication for the second RS resource set to a higher layer; a first counter is used to count the beam failure event indications for the first RS resource set, and a second counter is used to count the beam failure event indications for the second RS resource set.

8. A second node device for wireless communication, wherein it comprising:
a second transmitter sending a first higher layer message set, the first higher layer message set being used to configure a first RS resource pool for a first BWP, the first RS resource pool being used for radio link quality assessment; sending a first signaling, the protocol layer to which the first signaling belongs is a protocol layer under the RRC layer;
wherein, as a response of the receiver of the first signaling to receive the first signaling, the receiver of the first signaling assesses the radio link quality of the first BWP based on the second RS resource pool; at least one RS resource in the second RS resource pool depends on the TCI state of the CORESET.

9. A method used in a first node for wireless communication, wherein it comprises:
receiving a first higher layer message, and the first higher layer message is used for configuring a first RS resource pool for a first BWP, and the first RS resource pool is used for a radio link quality assessment;
receiving a first signaling, the protocol layer to which the first signal belongs is a protocol layer under the RRC layer;
as a response to receiving the first signaling, assessing a radio link quality of the first BWP according to a second RS resource pool;
wherein at least one RS resource of the second RS resource pool depends on the TCI state of CORESET.

10. A method used in a second node for wireless communication, wherein it comprises:
sending a first higher layer message set, and the first higher layer message set is used for configuring a first RS resource pool for the first BWP, and the first RS resource pool is used for a radio link quality assessment;
sending a first signaling, the protocol layer to which the first signal belongs is a protocol layer under the RRC layer;
wherein, as a response of the receiver of the first signaling to receive the first signaling, the receiver of the first signaling assesses the radio link quality of the first BWP based on the second RS resource pool; at least one RS resource in the second RS resource pool depends on the TCI state of the CORESET.
